# EUROPEAN PATENT SPECIFICATION

(11) **EP 3 854 025 B1**
(45) Date of publication and mention of the grant of the patent: **14.10.2026**
(21) Application number: 18933880.9
(22) Date of filing: 17.09.2018
(51) Int. Cl.: H04L 9/32, H04L 65/40, H04W 12/04, H04W 4/70, H04W 4/50, H04L 9/40, H04W 12/06

(54) **CREDENTIALS MANAGEMENT**
VERWALTUNG VON ZUGANGSDATEN
GESTION DE JUSTIFICATIFS D'IDENTITÉ

(43) Date of publication of application: 28.07.2021
(73) Proprietor: Nokia Solutions and Networks Oy, 02610 Espoo (FI)
(72) Inventor: PEYLO, Martin, 02600 Espoo (FI); STAUFER, Markus, 81541 Munich (DE)
(74) Representative: Nokia EPO representatives
(86) International application number: PCT/FI2018/050671
(87) International publication number: WO 2020/058559

(56) References cited:
- EP-A1- 3 346 669
- WO-A1-2013/120225
- WO-A1-2017/053048
- WO-A1-2018/013925
- WO-A1-2018/137873
- US-A1- 2018 084 427
- "3rd Generation Partnership Project; Technical Specification Group Services and System Aspects; Study on the security aspects of the next generation system (Release 14", 3GPP TR 33.899, 21 August 2017 (2017-08-21), XP051336126, Retrieved from the Internet <URL:http://www.3gpp.org/ftp/Specs/archive/33_series/33.899/33899-130.zip> [retrieved on 20181121]
- JI, X. ET AL.: "Overview of 5G security technology", SCIENCE CHINA INFORMATION SCIENCES, vol. 61, August 2018 (2018-08-01), XP036545939, Retrieved from the Internet <URL:https://link.springer.com/content/pdf/10.1007%2Fs11432-017-9426-4.pdf> [retrieved on 20181123]

## Description

### FIELD

The present invention relates to credentials management, and in particular to managing machine to machine communications related credentials.

### BACKGROUND

Machine-to -machine (M2M) communications devices are increasingly applied particularly due to introduction of Internet of Things (IoT) devices and services in many areas.

M2M systems typically require appropriate credentials for at least authenticating M2M devices towards an M2M service and M2M service provider. Transport Layer Security (TLS) is an example of a security protocol applied for M2M services for connecting an M2M device to an M2M platform service. M2M systems based on wireless communications typically require appropriate credentials for at least authenticating M2M devices towards the wireless network.

WO 2013/120225 A1 discloses a method for provisioning group service credentials during access network assisted M2M service bootstrap procedure. This method comprises the following steps: carrying out access network registration of a group of M2M devices, establishing temporary session keys based on access network credentials of the access network, establishing a group key and/or individual keys authenticated by means of the temporary session keys, and provisioning group service credentials under the protection of the group key. This invention also relates to a system for provisioning group service credentials during access network assisted M2M service bootstrap procedure.

### SUMMARY

The invention is defined by the features of the independent claims. Some specific embodiments are defined in the dependent claims.

According to a first aspect, there is provided a method, comprising: receiving private mobile network credentials for accessing a private mobile network by a mobile device configured for machine to machine communications, receiving machine to machine service credentials for accessing a machine to machine service by a machine to machine service application of the mobile device, provisioning the private mobile network credentials to a first private mobile network in response to verifying a request for activating or registering the mobile device to the first private mobile network, and provisioning the machine to machine service credentials to a first machine to machine service entity in response to verifying a request for activating or registering the mobile device to the first machine to machine service.

According to a second aspect, there is provided an apparatus, comprising at least one processor, at least one memory including computer program code, the at least one memory and the computer program code being configured to, with the at least one processor, cause the apparatus at least to: receive private mobile network credentials for accessing a private mobile network by a mobile device configured for machine to machine communications, receive machine to machine service credentials for accessing a machine to machine service by a machine to machine service application of the mobile device, provision the private mobile network credentials to a first private mobile network in response to verifying a request for activating or registering the mobile device to the first private mobile network, and provision the machine to machine service credentials to a first machine to machine service entity in response to verifying a request for activating or registering the mobile device to the first machine to machine service.

According to a third aspect, there is provided a computer program product, a computer readable medium, or a non-transitory computer readable medium comprising program instructions for causing an apparatus to perform the method according to any one of the above aspects or embodiments thereof.

In an embodiment according to any one of the aspects, an integrated credentials management service entity is configured to implement the method for a plurality of private mobile network and machine to machine service entities.

An embodiment according to any one of the aspects further comprises receiving a request for activating or registering the mobile device to a second machine to machine service entity and/or private mobile network, verifying the request on the basis of management credentials, and provisioning the machine to machine service and/or private mobile network credentials to the second machine to machine service entity and/or private mobile network.

An embodiment according to any one of the aspects further comprises receiving a request for deactivating or deregistering the mobile device in the first machine to machine service entity or the first private mobile network, and controlling removal of the machine to machine service credentials in the first machine to machine service entity or the private mobile network in response to the request for deactivating or deregistering.

An embodiment according to any one of the aspects further comprises storing updated private mobile network credentials and/or machine to machine service credentials in a first database accessible by the credentials management entity, and causing synchronization of the private mobile network credentials from the first database to at least one second database in the first private mobile network and/or synchronization of the machine to machine service credentials from the first database to at least one third database associated with the first machine to machine service entity.

In an embodiment according to any one of the aspects, the private mobile network credentials comprise credentials stored on a user identification module of a mobile network, such as the universal subscriber identification module (USIM) of a Third Generation Partnership Project (3GPP) system. The M2M service credentials and the private mobile network credentials may correspond to credentials stored on an integrated circuit card for the mobile device, such as credentials contained in a universal integrated circuit card (UICC) of a 3GPP system. The credentials contained in a UICC may be accessible to a UICC application.

### BRIEF DESCRIPTION OF THE DRAWINGS

FIGURE 1 illustrates an example system capable of supporting at least some embodiments of the present invention;
FIGURES 2 to 4 illustrate methods in accordance with at least some embodiments of the present invention;
FIGURE 5 illustrates storage of credentials in accordance with at least some embodiments of the present invention;
FIGURE 6 illustrates IoT device activation in accordance with at least some embodiments of the present invention; and
FIGURE 7 illustrates an apparatus in accordance with at least some embodiments of the present invention.

### EMBODIMENTS

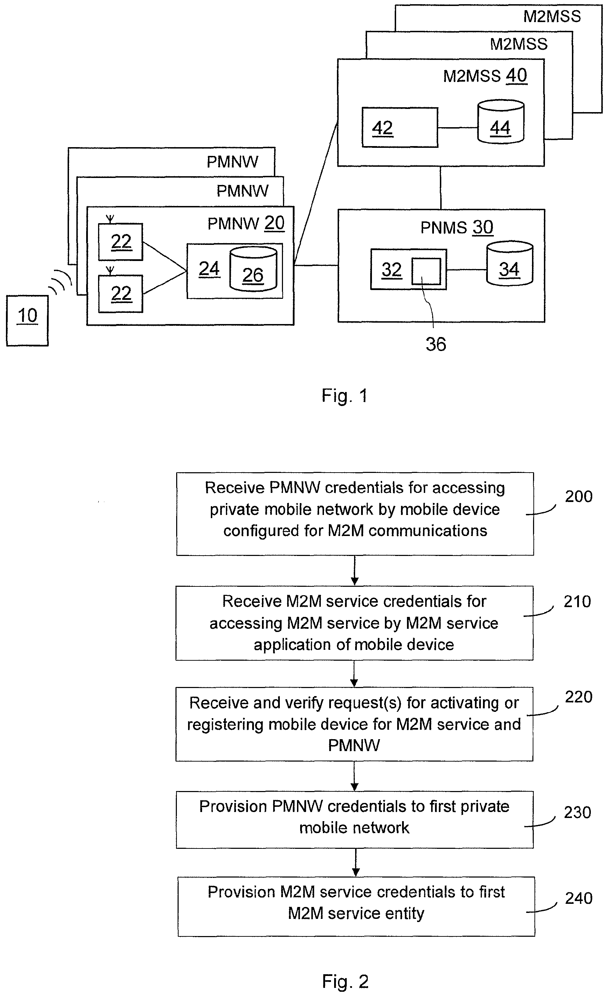

FIGURE 1 illustrates a simplified example system comprising a private mobile network PMNW 20, a private network management system PNMS 30, and a machine to machine service system (M2MSS) 40.

The PMNW 20 may comprise a plurality of radio access nodes 22, or base stations, capable of wirelessly communicating with mobile devices 10 and at least one communications manager or managing unit 24, such as a PMNW server. The manager 24 may comprise or be connected to at least one database 26 for storing PMNW operation related data, as in the present embodiments security credentials related data. The PMNW may be a network covering enterprise premises, a factory, a port, a mine, an airport, or a hospital, for example. The PMNW may support both human and machine communications. The PMNW may comprise cellular and/or non-cellular access network and core network elements and functionality.

The PMNW 20 is connected to further network and systems, such as the Internet. In the example system, at least some PMNW management related functions are carried out in the PNMS 30. The PNMS 30 comprises a controller 32, such as a PNMS server, and one or more databases 34. The controller may be configured to manage selected functions of a plurality of PMNWs and provide a user interface for the PMNW management. The PNMS 30 may be configured to provide centralized management for primate mobile networks as a cloud service. The PNMS functionality may be implemented in a regional or telecom operator-specific datacenter, for example. In some embodiments, the controller 32 is configured to manage security credentials for mobile devices 10 accessing the PMNW, referred herein as private mobile network (PMNW) credentials. For example, the controller may be a private network credentials management entity of a private network management cloud service.

The M2MSS 40 comprises a M2M service entity (M2MSE) 42, such as an IoT service server, configured to provide M2M service and related functions for M2M devices, such as the mobile device 10 configured for M2M communications. The M2MSS may comprise further units, such as M2M application servers and database(s) 44 storing M2M service related information. The M2MSS may comprise authentication and authorization function(s), a device gateway function(s), device management function(s), registries, and/or APIs.

The M2M service refers herein generally to a service involving or based on machine to machine communications, such as a communication service provided for autonomously operating work machines at a worksite. It is to be noted that the M2M service may also provide information and an interface to a person, for example to monitor data analytics results based on sensor data collected from the work machines. In some embodiments, mobile devices 10 connectable to the PMNW 20 are IoT devices and communicate with the M2MSE 42 providing access to an IoT cloud service. The M2MSS may comprise or be part of an IoT platform enabling IoT devices to securely interact with each other and IoT applications connected to the IoT platform. In a simple example, the IoT devices may transmit sensor data for big data analysis by specialized IoT applications.

Enterprises and other types of owners of PMNWs 20 may use the PMNWs for providing connectivity to the mobile M2M devices 10 by utilizing a specific protocol for M2M, such as message queue telemetry transport (MQTT) or advanced message queuing protocol (AMQP), or other generally used data transfer protocols like e.g. HTTP. The M2M communication may be secured by transport layer security (TLS) or another applicable security protocol. The mobile (M2M) devices 10 are authenticated towards the M2M service provided by the M2MSS 40, for example by utilizing X.509-certificate-based client-authentication.

In some embodiments, the PMNW 20 is a private long-term evolution (PLTE) network. Thus, the PMNW 20 comprises eNBs and evolved packet core (EPC) functionality (by the units 22 and 24, respectively). The PLTEs EPCs may be physically located close to their associated eNBs at the customer premises, while also other setups, such as EPCs physically located in central locations, are possible. The PNMS 30 and the controller 32 may be configured to manage and operate at least some functions of a plurality of PLTE networks' EPCs and eNBs. This may comprise provisioning of 3GPP subscriber credentials to the relevant PLTEs' home subscriber server (HSS) and their continuous management, such as de-/activation, by respective PLTE owner.

However, it will be appreciated that, instead of or in addition to PLTE, other cellular and non-cellular technologies may be applied, such as wireless local area network, Global System for Mobile communications (GSM), Universal Mobile Telecommunications System (UMTS) and other 3G systems, 4G (and various versions or evolutions thereof, such as the LTE-M and the narrowband IoT (NB-IoT), 5G, and future wireless communications generations.

It may be cumbersome and complicated for owners of private mobile networks and M2M devices to manage the security related registrations and settings for the PMNWs and towards the M2M services. For example, distribution, update and removal of appropriate certificates to appropriate entities may be challenging and/or costly for the owners. There are now provided methods and apparatuses facilitating improved credentials management for private mobile networks and M2M services.

FIGURE 2 illustrates a method according to some embodiments. The method may be implemented in an apparatus for managing credentials for M2MSS and PMNW, such as a PNMS 30 apparatus, in some embodiments the controller 32 and further an integrated credentials management (ICM) service or server module 36 thereof.

PMNW credentials for accessing a PMNW by a mobile device configured for M2M communications are received 200. The method and block 200 may be entered upon receiving a request or user input for activating or registering the mobile device, for example. M2M service credentials for accessing a M2M service by a M2M service application of the mobile device are received 210. The credentials may be stored in a database and received from the database, such as the database 34. The term credentials herein refers generally to security credentials which may be used for authentication and/or data encryption, such as credentials based on shared secret, public key cryptography credentials, certificates etc.

A request for activating or registering the mobile device for M2M service and PMNW is received and verified 220. It is to be noted that instead of a single request, separate requests may be received and verified for PMNW and M2M service credentials in block 220.

In response to verifying the request for activating or registering the mobile device for the PMNW, the PMNW credentials are provisioned 230 to a first PMNW, such as the PMNW 20. In response to verifying the request for activating or registering the mobile device for M2M service, the M2M service credentials are provisioned 240 to a first M2M service entity, such as the M2MSE 42. After receiving the credentials, the mobile device may be activated or registered in the first PMNW and the M2M service entity, and the mobile device may be authenticated.

It is to be appreciated that various modifications and additions may be implemented to the method of FIGURE 2 within the scope of the present claims. For example, the order of the blocks may be changed, e.g. the M2M service credentials may be received before PMNW credentials or they may be received 200, 210 in a single stage in a single message. The PMNW credentials may be associated after block 210 with the M2M service credentials. For example, the credentials may be stored under or associated via one or more other common identifiers, such as a mobile device identifier, a hardware token identifier, an account identifier, and/or account owner identifier. Some further example embodiments are illustrated below.

The controller 32 of the PNMS 30, for example, may be configured to provide an ICM service, by the ICM service module 36, for a plurality of private mobile networks and machine to machine service entities. The ICM service module 36 may be configured to carry out at least some of the features illustrated in connection with FIGURE 2 and further embodiments thereof. However, it is to be appreciated that the ICM service and module may be implemented outside PMNW and PMNW management functionality, for example closer to the M2M service or by a third party not associated to any PMNW or M2M service.

In some embodiments, the ICM service module 36 is configured to verify 220 the request(s) on the basis of management credentials. The term management credentials herein refers generally to one or more sets of credentials for validating the respective request and/or the authorization of the requesting entity, further example embodiments being illustrated below. Such association or linking of credentials may be carried out before entering block 200, when setting up the service or account for the service, for example.

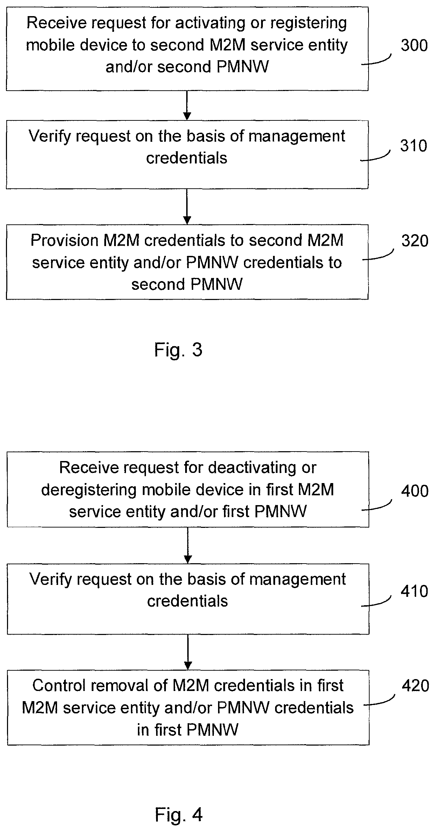

FIGURES 3 and 4 illustrate methods according to some embodiments. The methods may be implemented after the method of FIGURE 2 by an apparatus controlling M2M and PMNW provisioning, such as the controller 32 and the ICM module 36 thereof.

As illustrated in FIGURE 3, a request(s) may be received 300 for activating or registering the mobile device to a further (second) M2M entity and/or PMNW. The request(s) is verified 310 on the basis of associated management credentials. In response to successful verification, the M2M and/or PMNW credentials are provided 320 to the respective new M2M service entity and/or PMNW.

FIGURE 4 illustrates that request(s) may be received 400 for deactivating or deregistering the mobile device from the (first and/or second) M2M entity and/or PMNW. The request(s) may be verified 410 on the basis of the associated management credentials. In response to successful verification, removal of the M2M and/or PMNW credentials is controlled to the respective new M2M service entity and/or PMNW. For example, the ICM service module 36 may thus send a credentials removal, a deactivation, a deregistration or removal request or command to the respective PMNW 20 and/or M2MSE 42.

Depending on the applied configuration and access authorities of the service, the request may be received 220, 300, 400 from a user of the apparatus carrying out the method or from a further entity, such as another device under control of an owner or operator of the PNMS, or in some cases the PMNW 20 or the M2MSE 42. For example, the M2MSE 42 or the manager 24 may be able to unilaterally deactivate a mobile device in their respective network and inform the ICM of the deactivation, which may, depending on the applied policy, cause deactivation of the device in other accounts, too.

Some example embodiments on verifying the request and applying the management credentials are provided below. Authentication of the requestor and verification of the requestor's entitlement to the requested action may be carried out after receiving the request, e.g. as part of the block 220, 310, 410. The management credentials may thus comprise ICM access credentials (IAC) of an ICM service account, for a user to access the ICM service and request the respective action 220, 300, 400..

In some embodiments, the M2M service credentials and the PMNW credentials correspond to credentials stored on a removable integrated circuit (IC) card which can be attached to the mobile device. The ICM service may be operated by an IC card issuer, who issues the IC card to an owner. The verification of the request 220 by the ICM service may thus comprise verifying that the request is originating from the valid IC card owner. For this, records are maintained on authorized IC card owners, e.g. in the database 34.

The IC card owner typically owns, and can respectively control a mobile device, a PMNW management account, and an M2M service management account. The verification 220, 300, 400 may further comprise checking that requestor is authorized to provision the device to associated PMNW 20 and checking that requestor is authorized to provision the device to M2MSS 40. This may involve checking if the requestor has valid accounts at/for the PMNW 20 and the M2MSS 40. The management credentials may comprise M2M/PMNW management account credentials for the M2M service or the PMNW management account, respectively. For example, the ICM service module 36 may be configured to perform the check based on (M2M/PMNW) management account credentials received from the requestor.

Upon receiving updated PMNW and/or M2M service credentials for the mobile device 10, the ICM service module 36 may store the update credentials in the database 34. The ICM service module 36 may be configured to cause synchronization of the updated PMNW credentials to one or more PMNWs 20 and/or synchronization of the updated M2M service credentials to one or more M2MSSs 40 associated with the mobile device in the database 34.

The ICM service module 36 may generate a user interface for configuring a profile of the mobile device 10 (may refer to a profile associated with the IC card in the mobile device) comprising one or more associations to PMNWs and one or more associations to M2M services. The associations of the PMNW credentials with the M2M service credentials and may be controlled in accordance with a user input to the user interface. The user interface may provide a management view in which the associations to different PMNWs 20 and M2MSSs 40 may be set for each mobile device. For example, when the authorized user of the ICM service selects a new IoT service for the mobile device, the procedure illustrated in connection with FIGURE 3 is initiated.

The present features facilitate integrated management of network access and application level service access for M2M devices. In particular, a single, comprehensive ICM service and interface may be used for configuring credentials for new M2M devices to private mobile networks and M2M services. Further, the credentials may be easily synchronized to further M2M service networks and private mobile networks. A single hardware token comprising the M2M service and PMNW credentials may be utilized for accessing different M2M services and private cellular networks (instead of having to receive different tokens for different PMNWs and/or M2M services).

There are also other features that the controller 32, or the ICM service module 36 thereof, may be configured to perform automatically to all PMNWs 20 and M2MSSs 40 associated with the mobile device 10. For example, when the IC card, such as a UICC, is exchanged or moved from one mobile device to another, the respective update may be synchronized to all associated PMNWs 20 and M2MSSs 40 and databases 26, 44 thereof. Further mobile device characteristics data may be also configured and updated to all associated PMNWs 20 and M2MSSs 40 by the controller 32. For example, device type information or quality of service information may be provided, which may cause e.g. to adjusted network priority in the M2MSS 40 for the mobile device.

In some embodiments, the PMNW credentials are 3GPP system credentials. In some embodiments, the M2M service credentials are credentials for accessing an IoT service, such as credentials for TLS authentication. In an example embodiment, the operator of a PLTE network is able to activate an IoT device association to one or more PLTE networks and to one or more IoT services based on the 3GPP credentials stored on the USIM of the device. Further example embodiments are illustrated below.

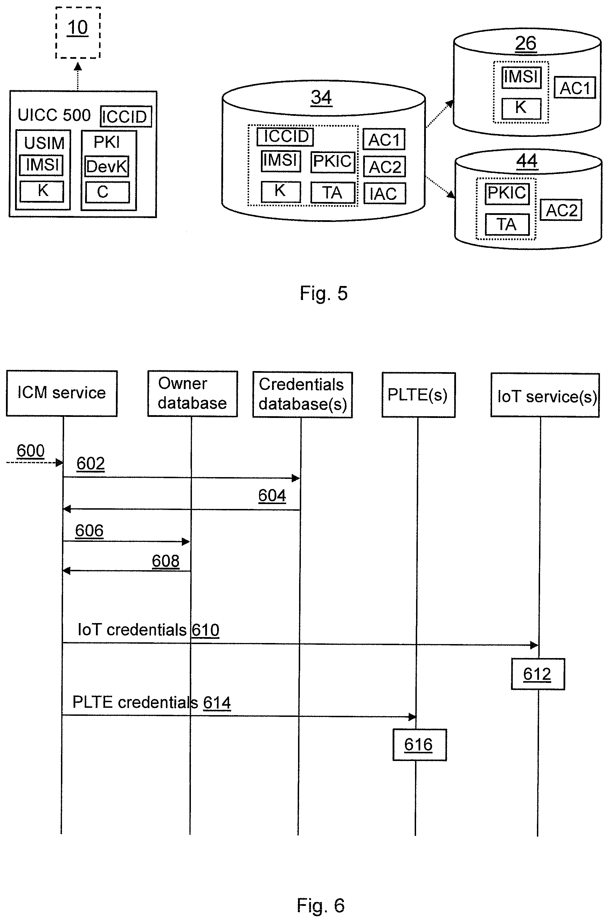

FIGURE 5 illustrates storage of credentials for 3GPP based PMNW and TLS/PKI based IoT system. 3^{rd} party suppliers may provide UICCs 500 comprising an USIM and also a PKI application for IoT capable mobile devices 10. The USIM comprises credentials for a 3GPP based system, such as the international mobile subscriber identity (IMSI) and secret key K. The IMSI and K are stored in the database 34 of the PNMS 30, from which they may be provisioned 230, 320 to the (HSS) database 26 of the PMNW 20. The UICC may be identified with a universal circuit card ID (ICCD). The ICCID may be stored in the database 34, as an identifier identifying the associated M2M and PMNW credentials.

It is to be appreciated that the presently disclosed credentials and key represent only some examples, and that other existing or forthcoming credentials may be applied depending on the applied authentication and key generation scheme, an example being the OPc in case of the 3GPP MILENAGE algorithm set.

The mobile device 10 may comprise a modem, comprising a terminal adapter (TA) and mobile terminal (MT), and be configured to use protocols as standardized by 3GPP (AT commands, application data protocol units (ADPUs)) to utilize the USIM and PKI application stored on the UICC 500. Appropriate software libraries available on the IoT device (Terminal Equipment), allow a local IoT application to utilize a secret key stored within the PKI application for authenticating towards the IoT service (via the PMNW 20). A library on the Terminal Equipment can e.g. tunnel APDUs via the modem by encapsulating them in the AT+CGLA command.

Devices exercising X.509 certificate-based TLS client authentication need to have access to an appropriate X.509 certificate (providing and authenticating identity information) and associated private key (cryptographic secret). The IoT service needs information about the identity of devices authorized to connect to it, as well as means to authenticate the device. This may be achieved by providing a device PKI trust anchor (TA) to the IoT service, as well as information about the unique device identity included within the device's individual X.509 certificate, e.g. in the certificate's subject name field. The device certificate may be provided as a whole to the IoT service, which then extracts the relevant information, or compares it in full to the certificate it receives during the device authentication procedure. If the device certificate is provided in full to the IoT service, providing the trust anchor TA may be avoided.

An UICC provider (or another credentials providing entity) initially provides the PKI credentials PKIC, in some embodiments the X.509 certificate for the UICC 500 and for the controller 32 / ICM service module 36 to be stored in the database 34, for subsequent provision 240, 320 to an IoT service entity.

As further illustrated in FIGURE 5, the database 34 may comprise PMNW management account credentials AC1 and M2M service management account credentials AC2 used to access the PMNW or M2M service for configuration, respectively, such as for provisioning 230, 240, 320 or deactivating 420 the PMNW or M2M service credentials. The database 34 may also comprise IAC illustrated above.

In some embodiments, there is an M2M service account and PNMS / ICM service initialization or linking stage preceding activation and the M2M/PMNW credentials management of M2M devices by the ICM service module 36 (as illustrated above in connection i.a. with FIGURE 2). Thus, an ICM service account of an owner of the M2M device may be associated, or linked, to an account for the M2M service respectively the PMNW. It is to be noted that the PMNW account may be the same as the ICM service account.

The ICM service module 36 receives M2M service management account credentials AC2 (which may also be referred to as M2M account credentials) initially e.g. from an owner or administrator of the PNMS 30. The ICM service module 36 stores the M2M management credentials AC2 to a database, which may be separate from the database 34 and may be referred to as an owner or user database, for example. The M2M service and PMNW account association may be established by the ICM service module 36 in response to the owner providing the appropriate management account credentials AC1 and AC2. Registering of the ICM service module 36 may be carried out to the M2M service entity in response to and on the basis of the M2M service management account credentials AC2.

In an example embodiment, the ICM service module 36 registers the certificate authority (CA), which is used to generate X.509 certificates related to the private keys on the IC, to the M2MSS 40. The registration request is sent to the M2MSS based on the respective M2M service account identification information (e.g. account ID) and is authorized using the M2M management account credentials AC2.

FIGURE 6 illustrates integrated IoT and PLTE credentials management and setup for an IoT device that needs to be activated. A request 600 for device activation is received by the ICM service, which may be implemented by the ICM service module 36 and may be provided or be part of an integrated IoT and PLTE management or registration service. The request may be based on a UI input received from an authorized PLTE operator or owner, for example.

The request comprises identifiers for the relevant IoT service and PLTE accounts and UICC identifier, such as the ICCID. In response to successful verification of the request on the basis of the IAC, a request 602 for IoT service and PLTE credentials is sent on the basis of the UICC identifier to credentials database(s), such as the database 34. The IoT service and PLTE credentials are sent 604 to the ICM service, which may request 606 PLTE and IoT service management account credentials (AC1, AC2), stored in the present example embodiment in the owner database. Based on the received IoT management credentials 608, the ICM service sends a request 610 to register the IoT credentials, such as the PKI certificate of the IoT device, to the associated IoT service(s) and IoT service entity(ies).

Upon verifying the request based on the IoT service management account credentials, the IoT service(s) my then activate 612 the IoT device. Based on the received PLTE management account credentials 608, the ICM service also sends a request 614 to register the PLTE credentials, such as the IMSI and the K, to the PLTE HSS, by applying an appropriate encryption protocol. Upon successful verification based on the PMNW account credentials, the registration of the IoT device to the PLTE may then be established 616 and the IoT device may be activated in the PLTE system, being represented by the IMSI stored also on the USIM in the UICC of the IoT device.

It is to be noted that at least some of the above illustrated features may be applied in systems applying network virtualization. Hence, network functions or nodes illustrated above may be shared between two physically separate devices forming one operational entity. In general, virtual networking may involve a process of combining hardware and software network resources and network functionality into a single, software-based administrative entity, a virtual network. Network virtualization may involve platform virtualization, often combined with resource virtualization. Network virtualization may be categorized as external virtual networking which combines many networks, or parts of networks, into the server computer or the host computer. External network virtualization is targeted to optimized network sharing. Another category is internal virtual networking which provides network-like functionality to software containers on a single system. For example, instances of 5G network functions can be instantiated as virtual network functions (VNFs) in network function virtualization (NFV) architecture.

In some embodiments, credentials for accessing a private mobile network function of a public land mobile network (PLMN) are managed together with M2M service credentials. Thus, the term private mobile network may refer to a private mobile network function or slice, which may as such be provided by a PLMN operator.

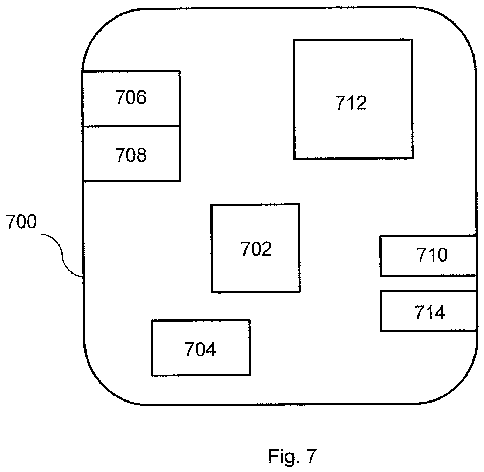

FIGURE 7 illustrates an example apparatus capable of supporting at least some embodiments of the present invention. Illustrated is a device 700, which may be arranged to carry out at least some of the embodiments related to credentials management as illustrated above. The device may include one or more controllers configured to carry out operations in accordance with at least some of the embodiments illustrated above, such as some or more of the steps illustrated above in connection with Figures 1 to 6. The device may operate as the controller 32, for example.

Comprised in the device 700 is a processor 702, which may comprise, for example, a single- or multi-core processor wherein a single-core processor comprises one processing core and a multi-core processor comprises more than one processing core. The processor 702 may comprise more than one processor. The processor may comprise at least one application-specific integrated circuit, ASIC. The processor may comprise at least one field-programmable gate array, FPGA. The processor may be means for performing method steps in the device. The processor may be configured, at least in part by computer instructions, to perform actions.

The device 700 may comprise memory 704. The memory may comprise random-access memory and/or permanent memory. The memory may comprise at least one RAM chip. The memory may comprise solid-state, magnetic, optical and/or holographic memory, for example. The memory may be at least in part accessible to the processor 702. The memory may be at least in part comprised in the processor 702. The memory 704 may be means for storing information. The memory may comprise computer instructions that the processor is configured to execute. When computer instructions configured to cause the processor to perform certain actions are stored in the memory, and the device in overall is configured to run under the direction of the processor using computer instructions from the memory, the processor and/or its at least one processing core may be considered to be configured to perform said certain actions. The memory may be at least in part comprised in the processor. The memory may be at least in part external to the device 700 but accessible to the device. For example, control parameters affecting operations related to the credentials management and associated information may be stored in one or more portions of the memory and used to control operation of the apparatus. Further, the memory may comprise device-specific cryptographic information, such as secret and public key of the device 700.

The device 700 may comprise a transmitter 706. The device may comprise a receiver 708. The transmitter and the receiver may be configured to transmit and receive, respectively, information in accordance with at least one wired or wireless, cellular or non-cellular standard. The transmitter may comprise more than one transmitter. The receiver may comprise more than one receiver. The transmitter and/or receiver may be configured to operate in accordance with global system for mobile communication, GSM, wideband code division multiple access, WCDMA, LTE, 5G, wireless local area network, WLAN, and/or Ethernet, for example. The device 700 may comprise a near-field communication, NFC, transceiver 710. The NFC transceiver may support at least one NFC technology, such as NFC, Bluetooth, Wibree or similar technologies.

The device 700 may comprise user interface, UI, 712. The UI may comprise at least one of a display, a keyboard, a touchscreen, a vibrator arranged to signal to a user by causing the device to vibrate, a speaker and a microphone. A user may be able to operate the device via the UI, for example to cause the device to perform at least some functions illustrated above, configure the credentials management service, and/or to manage digital files stored in the memory 704 or on a cloud accessible via the transmitter 706 and the receiver 708, or via the NFC transceiver 710.

The device 700 may comprise or be arranged to accept a user identity module or other type of memory module 714. The user identity module may comprise, for example, a subscriber identity module, SIM, and/or a personal identification IC card installable in the device 700. The user identity module 714 may comprise information identifying a subscription of a user of device 700. The user identity module 714 may comprise cryptographic information usable to verify the identity of a user of device 700 and/or to facilitate encryption and decryption of communication effected via the device 700.

The processor 702 may be furnished with a transmitter arranged to output information from the processor, via electrical leads internal to the device 700, to other devices comprised in the device. Such a transmitter may comprise a serial bus transmitter arranged to, for example, output information via at least one electrical lead to memory 704 for storage therein. Alternatively to a serial bus, the transmitter may comprise a parallel bus transmitter. Likewise the processor may comprise a receiver arranged to receive information in the processor, via electrical leads internal to the device 700, from other devices comprised in the device 700. Such a receiver may comprise a serial bus receiver arranged to, for example, receive information via at least one electrical lead from the receiver 708 for processing in the processor. Alternatively to a serial bus, the receiver may comprise a parallel bus receiver.

The device 700 may comprise further devices not illustrated in Figure 7. For example, the device may comprise at least one digital camera. Some devices may comprise a back-facing camera and a front-facing camera. The device may comprise a fingerprint sensor arranged to authenticate, at least in part, a user of the device. In some embodiments, the device lacks at least one device described above. For example, some devices may lack the NFC transceiver 710 and/or the user identity module 714.

The processor 702, the memory 704, the transmitter 706, the receiver 708, the NFC transceiver 710, the UI 712 and/or the user identity module 714 may be interconnected by electrical leads internal to the device 700 in a multitude of different ways. For example, each of the aforementioned devices may be separately connected to a master bus internal to the device, to allow for the devices to exchange information. However, as the skilled person will appreciate, this is only one example and depending on the embodiment various ways of interconnecting at least two of the aforementioned devices may be selected without departing from the scope of the present invention.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

References throughout this specification to one embodiment or an embodiment means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment. The skilled person will appreciate that above-illustrated embodiments may be combined in various ways. Embodiments illustrated in connection with Figures 2 to 8 may be taken in isolation or further combined together.

Various embodiments and examples of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the preceding description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

The verbs "to comprise" and "to include" are used in this document as open limitations that neither exclude nor require the existence of also un-recited features. The features recited in depending claims are mutually freely combinable unless otherwise explicitly stated. Furthermore, it is to be understood that the use of "a" or "an", that is, a singular form, throughout this document does not exclude a plurality.

### INDUSTRIAL APPLICABILITY

At least some embodiments of the present invention find industrial application in communications.

## Claims

1. An apparatus comprising means for performing:
- receiving (200) private mobile network credentials for accessing a private mobile network (20) by a mobile device (10) configured for machine to machine communications,
- receiving (210) machine to machine service credentials for accessing a machine to machine service by a machine to machine service application of the mobile device,
- receiving and verifying (220) a request for activating or registering the mobile device to a first private mobile network,
- receiving and verifying (220) a request for activating or registering the mobile device to a first machine to machine service entity,
- provisioning (230) the private mobile network credentials to the first private mobile network in response to the verifying of the request for activating or registering the mobile device to the first private mobile network, and
- provisioning (240) the machine to machine service credentials to the first machine to machine service entity in response to the verifying of the request for activating or registering the mobile device to the first machine to machine service.

2. The apparatus of claim 1, wherein the apparatus is an integrated credentials management service entity configured to provide an integrated credentials management service for a plurality of private mobile network (20) and machine to machine service entities, wherein the integrated credentials management service comprises the actions performed by the means of claim 1.

3. The apparatus of claim 1 or 2, wherein the means are further configured to perform:
- receiving a request for activating or registering the mobile device (10) to a second machine to machine service entity,
- verifying the request on the basis of associated management credentials, and
- provisioning the machine to machine service credentials to the second machine to machine service entity.

4. The apparatus of any preceding claim, wherein the means are further configured to perform:
- receiving a request for activating or registering the mobile device (10) to a second private mobile network,
- verifying the request on the basis of associated management credentials, and
- provisioning the private mobile network credentials credentials to the second private mobile network.

5. The apparatus of any preceding claim, wherein the means are further configured to perform:
- receiving a request for deactivating or deregistering the mobile device (10) in the first machine to machine service entity, and
- controlling, in response to the request for deactivating or deregistering, (420) the first machine to machine service entity to remove the machine to machine service credentials in the first machine to machine service entity.

6. The apparatus of any preceding claim, wherein the means are further configured to perform:
- receiving a request for deactivating or deregistering the mobile device (10) in the first private mobile network (20), and
- controlling, in response to the request for deactivating or deregistering, (420) the first private mobile network to remove the private mobile network credentials in the first private mobile network.

7. The apparatus of any preceding claim, wherein the means are further configured to perform:
- storing updated private mobile network credentials and/or machine to machine service credentials in a first database accessible by the apparatus, and
- causing synchronization of the private mobile network credentials from the first database to at least one second database in the first private mobile network (20) and/or synchronization of the machine to machine service credentials from the first database to at least one third database associated with the first machine to machine service entity.

8. The apparatus of any preceding claim, wherein the means are further configured to perform:
- generating a user interface for configuring a profile of the mobile device (10) comprising one or more associations to private mobile networks (20) and one or more associations to machine to machine services, and
- controlling an association of the private mobile network credentials with the machine to machine service credentials in accordance with a user input to the user interface, wherein the association is indicative of the machine to machine service being provided using the private mobile network.

9. The apparatus of any preceding claim, wherein the means are further configured to perform:
- receiving machine to machine service management account credentials associated with a machine to machine service account,
- associating a credentials management service account of an owner of the mobile device (10) to the machine to machine service account, and
- causing registering of the apparatus to the first machine to machine service entity on the basis of the machine to machine service management account credentials.

10. The apparatus of any preceding claim, wherein the machine to machine service credentials are Internet of Things service credentials and the first machine to machine service entity is an Internet of Things service server.

11. The apparatus of any preceding claim, wherein the apparatus is a private network credentials management entity of a private network management cloud service.

12. The apparatus of any preceding claim, wherein the means comprise at least one processor; and at least one memory including computer program code.

13. A method, comprising:
- receiving (200) private mobile network credentials for accessing a private mobile network (20) by a mobile device (10) configured for machine to machine communications,
- receiving (210) machine to machine service credentials for accessing a machine to machine service by a machine to machine service application of the mobile device,
- receiving and verifying (220) a request for activating or registering the mobile device to a first private mobile network,
- receiving and verifying (220) a request for activating or registering the mobile device to a first machine to machine service entity,
- provisioning (230) the private mobile network credentials to the first private mobile network in response to the verifying of the request for activating or registering the mobile device to the first private mobile network, and
- provisioning (240) the machine to machine service credentials to the first machine to machine service entity in response to the verifying of the request for activating or registering the mobile device to the first machine to machine service.

14. A computer program, comprising instructions for performing at least the following:
- receiving (200) private mobile network credentials for accessing a private mobile network (20) by a mobile device (10) configured for machine to machine communications,
- receiving (210) machine to machine service credentials for accessing a machine to machine service by a machine to machine service application of the mobile device,
- receiving and verifying (220) a request for activating or registering the mobile device to a first private mobile network,
- receiving and verifying (220) a request for activating or registering the mobile device to a first machine to machine service entity,
- provisioning (230) the private mobile network credentials to the first private mobile network in response to the verifying of the request for activating or registering the mobile device to the first private mobile network, and
- provisioning the machine to machine service credentials to the first machine to machine service entity in response to the verifying of the request for activating or registering the mobile device to the first machine to machine service.

15. A computer readable medium, comprising program instructions for causing an apparatus to perform at least the following:
- receiving (200) private mobile network credentials for accessing a private mobile network (20) by a mobile device (10) configured for machine to machine communications,
- receiving (210) machine to machine service credentials for accessing a machine to machine service by a machine to machine service application of the mobile device,
- receiving and verifying (220) a request for activating or registering the mobile device to a first private mobile network,
- receiving and verifying (220) a request for activating or registering the mobile device to a first machine to machine service entity,
- provisioning (230) the private mobile network credentials to the first private mobile network in response to the verifying of the request for activating or registering the mobile device to the first private mobile network, and
- provisioning the machine to machine service credentials to the first machine to machine service entity in response to the verifying of the request for activating or registering the mobile device to the first machine to machine service.

## Patentansprüche

1. Vorrichtung, umfassend Mittel zum Durchführen von:
- Empfangen (200) von Zugangsdaten für ein privates Mobilfunknetz zum Zugreifen auf ein privates Mobilfunknetz (20) durch ein mobiles Gerät (10), das für Maschine-zu-Maschine-Kommunikation konfiguriert ist,
- Empfangen (210) von Zugangsdaten für einen Maschine-zu-Maschine-Dienst zum Zugreifen auf einen Maschine-zu-Maschine-Dienst durch eine Maschine-zu-Maschine-Dienstanwendung des mobilen Geräts,
- Empfangen und Verifizieren (220) einer Anforderung zum Aktivieren oder Registrieren des mobilen Geräts bei einem ersten privaten Mobilfunknetz,
- Empfangen und Verifizieren (220) einer Anforderung zum Aktivieren oder Registrieren des mobilen Geräts bei einer ersten Maschine-zu-Maschine-Diensteinheit,
- Bereitstellen (230) der Zugangsdaten für das private Mobilfunknetz an das erste private Mobilfunknetz als Reaktion auf das Verifizieren der Anforderung zum Aktivieren oder Registrieren des mobilen Geräts bei dem ersten privaten Mobilfunknetz, und
- Bereitstellen (240) der Zugangsdaten für den Maschine-zu-Maschine-Dienst an die erste Maschine-zu-Maschine-Diensteinheit als Reaktion auf das Verifizieren der Anforderung zum Aktivieren oder Registrieren des mobilen Geräts bei dem ersten Maschine-zu-Maschine-Dienst.

2. Vorrichtung nach Anspruch 1, wobei die Vorrichtung eine integrierte Zugangsdatenverwaltungsdiensteinheit ist, die konfiguriert ist, um einen integrierten Zugangsdatenverwaltungsdienst für eine Mehrzahl von privatem Mobilfunknetz (20) und Maschine-zu-Maschine-Diensteinheiten bereitzustellen, wobei der integrierte Zugangsdatenverwaltungsdienst die durch die Mittel nach Anspruch 1 durchgeführten Handlungen umfasst.

3. Vorrichtung nach Anspruch 1 oder 2, wobei die Mittel ferner konfiguriert sind zum Durchführen von:
- Empfangen einer Anforderung zum Aktivieren oder Registrieren des mobilen Geräts (10) bei einer zweiten Maschine-zu-Maschine-Diensteinheit,
- Verifizieren der Anforderung auf der Grundlage zugeordneter Verwaltungszugangsdaten, und
- Bereitstellen der Zugangsdaten für den Maschine-zu-Maschine-Dienst an die zweite Maschine-zu-Maschine-Diensteinheit.

4. Vorrichtung nach einem der vorhergehenden Ansprüche, wobei die Mittel ferner konfiguriert sind zum Durchführen von:
- Empfangen einer Anforderung zum Aktivieren oder Registrieren des mobilen Geräts (10) bei einem zweiten privaten Mobilfunknetz,
- Verifizieren der Anforderung auf der Grundlage zugeordneter Verwaltungszugangsdaten, und
- Bereitstellen der Zugangsdaten für das private Mobilfunknetz Zugangsdaten an das zweite private Mobilfunknetz.

5. Vorrichtung nach einem der vorhergehenden Ansprüche, wobei die Mittel ferner konfiguriert sind zum Durchführen von:
- Empfangen einer Anforderung zum Deaktivieren oder Deregistrieren des mobilen Geräts (10) in der ersten Maschine-zu-Maschine-Diensteinheit, und
- Steuern, als Reaktion auf die Anforderung zum Deaktivieren oder Deregistrieren, (420) der ersten Maschine-zu-Maschine-Diensteinheit zum Entfernen der Zugangsdaten für den Maschine-zu-Maschine-Dienst in der ersten Maschine-zu-Maschine-Diensteinheit.

6. Vorrichtung nach einem der vorhergehenden Ansprüche, wobei die Mittel ferner konfiguriert sind zum Durchführen von:
- Empfangen einer Anforderung zum Deaktivieren oder Deregistrieren des mobilen Geräts (10) in dem ersten privaten Mobilfunknetz (20), und
- Steuern, als Reaktion auf die Anforderung zum Deaktivieren oder Deregistrieren, (420) des ersten privaten Mobilfunknetzes zum Entfernen der Zugangsdaten für das private Mobilfunknetz in dem ersten privaten Mobilfunknetz.

7. Vorrichtung nach einem der vorhergehenden Ansprüche, wobei die Mittel ferner konfiguriert sind zum Durchführen von:
- Speichern von aktualisierten Zugangsdaten für das private Mobilfunknetz und/oder Zugangsdaten für den Maschine-zu-Maschine-Dienst in einer ersten Datenbank, die für die Vorrichtung zugänglich ist, und
- Bewirken einer Synchronisation der Zugangsdaten für das private Mobilfunknetz von der ersten Datenbank zu mindestens einer zweiten Datenbank in dem ersten privaten Mobilfunknetz (20) und/oder einer Synchronisation der Zugangsdaten für den Maschine-zu-Maschine-Dienst von der ersten Datenbank zu mindestens einer dritten Datenbank, die der ersten Maschine-zu-Maschine-Diensteinheit zugeordnet ist.

8. Vorrichtung nach einem der vorhergehenden Ansprüche, wobei die Mittel ferner konfiguriert sind zum Durchführen von:
- Erzeugen einer Benutzerschnittstelle zum Konfigurieren eines Profils des mobilen Geräts (10), das eine oder mehrere Zuordnungen zu privaten Mobilfunknetzen (20) und eine oder mehrere Zuordnungen zu Maschine-zu-Maschine-Diensten umfasst, und
- Steuern einer Zuordnung der Zugangsdaten für das private Mobilfunknetz zu den Zugangsdaten für den Maschine-zu-Maschine-Dienst gemäß einer Benutzereingabe an der Benutzerschnittstelle, wobei die Zuordnung angibt, dass der Maschine-zu-Maschine-Dienst unter Verwendung des privaten Mobilfunknetzes bereitgestellt wird.

9. Vorrichtung nach einem der vorhergehenden Ansprüche, wobei die Mittel ferner konfiguriert sind zum Durchführen von:
- Empfangen von Zugangsdaten eines Verwaltungskontos für einen Maschine-zu-Maschine-Dienst, die einem Maschine-zu-Maschine-Dienstkonto zugeordnet sind,
- Zuordnen eines Zugangsdatenverwaltungsdienstkontos eines Eigentümers des mobilen Geräts (10) zu dem Maschine-zu-Maschine-Dienstkonto, und
- Bewirken eines Registrierens der Vorrichtung bei der ersten Maschine-zu-Maschine-Diensteinheit auf der Grundlage der Zugangsdaten des Verwaltungskontos für den Maschine-zu-Maschine-Dienst.

10. Vorrichtung nach einem der vorhergehenden Ansprüche, wobei die Zugangsdaten für den Maschine-zu-Maschine-Dienst Zugangsdaten für einen Internet-der-Dinge-Dienst sind und die erste Maschine-zu-Maschine-Diensteinheit ein Internet-der-Dinge-Dienstserver ist.

11. Vorrichtung nach einem der vorhergehenden Ansprüche, wobei die Vorrichtung eine Verwaltungseinheit für Zugangsdaten eines privaten Netzwerks eines Cloud-Dienstes zur Verwaltung eines privaten Netzwerks ist.

12. Vorrichtung nach einem der vorhergehenden Ansprüche, wobei die Mittel mindestens einen Prozessor; und mindestens einen Speicher, der Computerprogrammcode enthält, umfassen.

13. Verfahren, umfassend:
- Empfangen (200) von Zugangsdaten für ein privates Mobilfunknetz zum Zugreifen auf ein privates Mobilfunknetz (20) durch ein mobiles Gerät (10), das für Maschine-zu-Maschine-Kommunikation konfiguriert ist,
- Empfangen (210) von Zugangsdaten für einen Maschine-zu-Maschine-Dienst zum Zugreifen auf einen Maschine-zu-Maschine-Dienst durch eine Maschine-zu-Maschine-Dienstanwendung des mobilen Geräts,
- Empfangen und Verifizieren (220) einer Anforderung zum Aktivieren oder Registrieren des mobilen Geräts bei einem ersten privaten Mobilfunknetz,
- Empfangen und Verifizieren (220) einer Anforderung zum Aktivieren oder Registrieren des mobilen Geräts bei einer ersten Maschine-zu-Maschine-Diensteinheit,
- Bereitstellen (230) der Zugangsdaten für das private Mobilfunknetz an das erste private Mobilfunknetz als Reaktion auf das Verifizieren der Anforderung zum Aktivieren oder Registrieren des mobilen Geräts bei dem ersten privaten Mobilfunknetz, und
- Bereitstellen (240) der Zugangsdaten für den Maschine-zu-Maschine-Dienst an die erste Maschine-zu-Maschine-Diensteinheit als Reaktion auf das Verifizieren der Anforderung zum Aktivieren oder Registrieren des mobilen Geräts bei dem ersten Maschine-zu-Maschine-Dienst.

14. Computerprogramm, umfassend Anweisungen zum Durchführen mindestens des Folgenden:
- Empfangen (200) von Zugangsdaten für ein privates Mobilfunknetz zum Zugreifen auf ein privates Mobilfunknetz (20) durch ein mobiles Gerät (10), das für Maschine-zu-Maschine-Kommunikation konfiguriert ist,
- Empfangen (210) von Zugangsdaten für einen Maschine-zu-Maschine-Dienst zum Zugreifen auf einen Maschine-zu-Maschine-Dienst durch eine Maschine-zu-Maschine-Dienstanwendung des mobilen Geräts,
- Empfangen und Verifizieren (220) einer Anforderung zum Aktivieren oder Registrieren des mobilen Geräts bei einem ersten privaten Mobilfunknetz,
- Empfangen und Verifizieren (220) einer Anforderung zum Aktivieren oder Registrieren des mobilen Geräts bei einer ersten Maschine-zu-Maschine-Diensteinheit,
- Bereitstellen (230) der Zugangsdaten für das private Mobilfunknetz an das erste private Mobilfunknetz als Reaktion auf das Verifizieren der Anforderung zum Aktivieren oder Registrieren des mobilen Geräts bei dem ersten privaten Mobilfunknetz, und
- Bereitstellen der Zugangsdaten für den Maschine-zu-Maschine-Dienst an die erste Maschine-zu-Maschine-Diensteinheit als Reaktion auf das Verifizieren der Anforderung zum Aktivieren oder Registrieren des mobilen Geräts bei dem ersten Maschine-zu-Maschine-Dienst.

15. Computerlesbares Medium, umfassend Programmanweisungen zum Veranlassen einer Vorrichtung, mindestens das Folgende durchzuführen:
- Empfangen (200) von Zugangsdaten für ein privates Mobilfunknetz zum Zugreifen auf ein privates Mobilfunknetz (20) durch ein mobiles Gerät (10), das für Maschine-zu-Maschine-Kommunikation konfiguriert ist,
- Empfangen (210) von Zugangsdaten für einen Maschine-zu-Maschine-Dienst zum Zugreifen auf einen Maschine-zu-Maschine-Dienst durch eine Maschine-zu-Maschine-Dienstanwendung des mobilen Geräts,
- Empfangen und Verifizieren (220) einer Anforderung zum Aktivieren oder Registrieren des mobilen Geräts bei einem ersten privaten Mobilfunknetz,
- Empfangen und Verifizieren (220) einer Anforderung zum Aktivieren oder Registrieren des mobilen Geräts bei einer ersten Maschine-zu-Maschine-Diensteinheit,
- Bereitstellen (230) der Zugangsdaten für das private Mobilfunknetz an das erste private Mobilfunknetz als Reaktion auf das Verifizieren der Anforderung zum Aktivieren oder Registrieren des mobilen Geräts bei dem ersten privaten Mobilfunknetz, und
- Bereitstellen der Zugangsdaten für den Maschine-zu-Maschine-Dienst an die erste Maschine-zu-Maschine-Diensteinheit als Reaktion auf das Verifizieren der Anforderung zum Aktivieren oder Registrieren des mobilen Geräts bei dem ersten Maschine-zu-Maschine-Dienst.

## Revendications

1. Appareil comprenant des moyens pour effectuer :
- la réception (200) de justificatifs d'identité de réseau mobile privé pour accéder à un réseau mobile privé (20) par un dispositif mobile (10) configuré pour des communications machine à machine,
- la réception (210) de justificatifs d'identité de service machine à machine pour accéder à un service machine à machine par une application de service machine à machine du dispositif mobile,
- la réception et la vérification (220) d'une requête d'activation ou d'enregistrement du dispositif mobile auprès d'un premier réseau mobile privé,
- la réception et la vérification (220) d'une requête d'activation ou d'enregistrement du dispositif mobile auprès d'une première entité de service machine à machine,
- le provisionnement (230) des justificatifs d'identité de réseau mobile privé au premier réseau mobile privé en réponse à la vérification de la requête d'activation ou d'enregistrement du dispositif mobile auprès du premier réseau mobile privé, et
- le provisionnement (240) des justificatifs d'identité de service machine à machine à la première entité de service machine à machine en réponse à la vérification de la requête d'activation ou d'enregistrement du dispositif mobile auprès du premier service machine à machine.

2. L'appareil selon la revendication 1, dans lequel l'appareil est une entité de service de gestion intégrée de justificatifs d'identité configurée pour fournir un service de gestion intégrée de justificatifs d'identité pour une pluralité de réseau mobile privé (20) et d'entités de service machine à machine, dans lequel le service de gestion intégrée de justificatifs d'identité comprend les actions effectuées par les moyens de la revendication 1.

3. L'appareil selon la revendication 1 ou 2, dans lequel les moyens sont en outre configurés pour effectuer :
- la réception d'une requête d'activation ou d'enregistrement du dispositif mobile (10) auprès d'une deuxième entité de service machine à machine,
- la vérification de la requête sur la base de justificatifs d'identité de gestion associés, et
- le provisionnement des justificatifs d'identité de service machine à machine à la deuxième entité de service machine à machine.

4. L'appareil selon l'une quelconque des revendications précédentes, dans lequel les moyens sont en outre configurés pour effectuer :
- la réception d'une requête d'activation ou d'enregistrement du dispositif mobile (10) auprès d'un deuxième réseau mobile privé,
- la vérification de la requête sur la base de justificatifs d'identité de gestion associés, et
- le provisionnement des justificatifs d'identité de réseau mobile privé justificatifs d'identité au deuxième réseau mobile privé.

5. L'appareil selon l'une quelconque des revendications précédentes, dans lequel les moyens sont en outre configurés pour effectuer :
- la réception d'une requête de désactivation ou de désenregistrement du dispositif mobile (10) dans la première entité de service machine à machine, et
- la commande, en réponse à la requête de désactivation ou de désenregistrement, (420) de la première entité de service machine à machine pour supprimer les justificatifs d'identité de service machine à machine dans la première entité de service machine à machine.

6. L'appareil selon l'une quelconque des revendications précédentes, dans lequel les moyens sont en outre configurés pour effectuer :
- la réception d'une requête de désactivation ou de désenregistrement du dispositif mobile (10) dans le premier réseau mobile privé (20), et
- la commande, en réponse à la requête de désactivation ou de désenregistrement, (420) du premier réseau mobile privé pour supprimer les justificatifs d'identité de réseau mobile privé dans le premier réseau mobile privé.

7. L'appareil selon l'une quelconque des revendications précédentes, dans lequel les moyens sont en outre configurés pour effectuer :
- le stockage de justificatifs d'identité de réseau mobile privé mis à jour et/ou de justificatifs d'identité de service machine à machine dans une première base de données accessible par l'appareil, et
- le déclenchement d'une synchronisation des justificatifs d'identité de réseau mobile privé de la première base de données vers au moins une deuxième base de données dans le premier réseau mobile privé (20) et/ou d'une synchronisation des justificatifs d'identité de service machine à machine de la première base de données vers au moins une troisième base de données associée à la première entité de service machine à machine.

8. L'appareil selon l'une quelconque des revendications précédentes, dans lequel les moyens sont en outre configurés pour effectuer :
- la génération d'une interface utilisateur pour configurer un profil du dispositif mobile (10) comprenant une ou plusieurs associations à des réseaux mobiles privés (20) et une ou plusieurs associations à des services machine à machine, et
- la commande d'une association des justificatifs d'identité de réseau mobile privé avec les justificatifs d'identité de service machine à machine conformément à une entrée utilisateur dans l'interface utilisateur, dans lequel l'association indique que le service machine à machine est fourni en utilisant le réseau mobile privé.

9. L'appareil selon l'une quelconque des revendications précédentes, dans lequel les moyens sont en outre configurés pour effectuer :
- la réception de justificatifs d'identité de compte de gestion de service machine à machine associés à un compte de service machine à machine,
- l'association d'un compte de service de gestion de justificatifs d'identité d'un propriétaire du dispositif mobile (10) au compte de service machine à machine, et
- le déclenchement de l'enregistrement de l'appareil auprès de la première entité de service machine à machine sur la base des justificatifs d'identité de compte de gestion de service machine à machine.

10. L'appareil selon l'une quelconque des revendications précédentes, dans lequel les justificatifs d'identité de service machine à machine sont des justificatifs d'identité de service de l'Internet des objets et la première entité de service machine à machine est un serveur de service de l'Internet des objets.

11. L'appareil selon l'une quelconque des revendications précédentes, dans lequel l'appareil est une entité de gestion de justificatifs d'identité de réseau privé d'un service en nuage de gestion de réseau privé.

12. L'appareil selon l'une quelconque des revendications précédentes, dans lequel les moyens comprennent au moins un processeur ; et au moins une mémoire comprenant un code de programme informatique.

13. Procédé, comprenant :
- la réception (200) de justificatifs d'identité de réseau mobile privé pour accéder à un réseau mobile privé (20) par un dispositif mobile (10) configuré pour des communications machine à machine,
- la réception (210) de justificatifs d'identité de service machine à machine pour accéder à un service machine à machine par une application de service machine à machine du dispositif mobile,
- la réception et la vérification (220) d'une requête d'activation ou d'enregistrement du dispositif mobile auprès d'un premier réseau mobile privé,
- la réception et la vérification (220) d'une requête d'activation ou d'enregistrement du dispositif mobile auprès d'une première entité de service machine à machine,
- le provisionnement (230) des justificatifs d'identité de réseau mobile privé au premier réseau mobile privé en réponse à la vérification de la requête d'activation ou d'enregistrement du dispositif mobile auprès du premier réseau mobile privé, et
- le provisionnement (240) des justificatifs d'identité de service machine à machine à la première entité de service machine à machine en réponse à la vérification de la requête d'activation ou d'enregistrement du dispositif mobile auprès du premier service machine à machine.

14. Programme informatique, comprenant des instructions pour effectuer au moins ce qui suit :
- la réception (200) de justificatifs d'identité de réseau mobile privé pour accéder à un réseau mobile privé (20) par un dispositif mobile (10) configuré pour des communications machine à machine,
- la réception (210) de justificatifs d'identité de service machine à machine pour accéder à un service machine à machine par une application de service machine à machine du dispositif mobile,
- la réception et la vérification (220) d'une requête d'activation ou d'enregistrement du dispositif mobile auprès d'un premier réseau mobile privé,
- la réception et la vérification (220) d'une requête d'activation ou d'enregistrement du dispositif mobile auprès d'une première entité de service machine à machine,
- le provisionnement (230) des justificatifs d'identité de réseau mobile privé au premier réseau mobile privé en réponse à la vérification de la requête d'activation ou d'enregistrement du dispositif mobile auprès du premier réseau mobile privé, et
- le provisionnement des justificatifs d'identité de service machine à machine à la première entité de service machine à machine en réponse à la vérification de la requête d'activation ou d'enregistrement du dispositif mobile auprès du premier service machine à machine.

15. Support lisible par ordinateur, comprenant des instructions de programme pour amener un appareil à effectuer au moins ce qui suit :
- la réception (200) de justificatifs d'identité de réseau mobile privé pour accéder à un réseau mobile privé (20) par un dispositif mobile (10) configuré pour des communications machine à machine,
- la réception (210) de justificatifs d'identité de service machine à machine pour accéder à un service machine à machine par une application de service machine à machine du dispositif mobile,
- la réception et la vérification (220) d'une requête d'activation ou d'enregistrement du dispositif mobile auprès d'un premier réseau mobile privé,
- la réception et la vérification (220) d'une requête d'activation ou d'enregistrement du dispositif mobile auprès d'une première entité de service machine à machine,
- le provisionnement (230) des justificatifs d'identité de réseau mobile privé au premier réseau mobile privé en réponse à la vérification de la requête d'activation ou d'enregistrement du dispositif mobile auprès du premier réseau mobile privé, et
- le provisionnement des justificatifs d'identité de service machine à machine à la première entité de service machine à machine en réponse à la vérification de la requête d'activation ou d'enregistrement du dispositif mobile auprès du premier service machine à machine.
